# FASCICULE DE BREVET EUROPEEN

(11) **EP 0 479 096 B1**
(45) Date de publication et mention de la délivrance du brevet: **22.01.1997**
(21) Numéro de dépôt: 91116222.0
(22) Date de dépôt: 24.09.1991
(51) Int. Cl.: H04L 12/46

(54) **Pont pour relier un réseau local, conforme à la norme ieee 802.3 à un réseau de télécommunications à technique temporelle asynchrone**
Brücke zur Verbindung eines lokalen, nach der Norm IEEE 802.3 gerichteten Netzes an ein ATM Fernmeldenetz
Bridge to link a local area network meeting the standard IEEE 802.3 to an asynchronous transfer mode telecommunications network

(30) Priorité: 27.09.1990 FR 9011943
(43) Date de publication de la demande: 08.04.1992
(73) Titulaire: ALCATEL CIT, 75008 Paris (FR)
(72) Inventeur: Balzano, Jean-Michel, F-22700 Perros-Guirec (FR); Noslier, Yvon, F-22300 Lannion (FR)
(74) Mandataire: Weinmiller, Jürgen

(56) Documents cités:
- INTERNATIONAL SWITCHING SYMPOSIUM vol. 2, 1 Juin 1990, STOCKHOLM pages 9 - 14; J.P.QUINQUIS ET AL: 'DATA SERVICES AND LANS INTERCONNECTION USING ATM TECHNIQUE'
- IEEE INTERNATIONAL CONFERENCE ON COMMUNICATIONS vol. 2, 25 Juin 1986, TORONTO,CA pages 1255 - 1259; A. ALBANESE ET AL.'AN ARCHITECTURE FOR TRANSPARENT MAN/LAN GATEWAYS'
- IEEE GLOBAL TELECOMMUNICATIONS CONFERENCE vol. 3, 1 Décembre 1988, HOLLYWOOD, US pages 1791 - 1797; D.JÄPEL ET AL: 'LAN/ISDN INTERCONNECT VIA FRAME RELAY'

## Description

L'invention concerne un pont pour relier un réseau local conforme à la norme IEEE 802.3 à un réseau de télécommunications à technique temporelle asynchrone. Ce type de réseau local est caractérisé par une méthode d'accès par détection de porteuse et par détection de collision. Il est commercialisé notamment sous la marque ETHERNET.

Il est souvent souhaitable de transmettre des données d'un réseau local à un autre, au travers d'un réseau de télécommunications. Lorsqu'il s'agit d'un réseau classique de télécommunications à technique temporelle synchrone, il est connu de relier chaque réseau local au réseau de télécommunications au moyen d'une liaison spécialisée, ayant un débit de 2Mb/s pour chaque direction, et au moyen d'un dispositif appellé pont. Un pont de type connu transmet intégralement le contenu des trames circulant sur le bus du réseau local, y compris l'en-tête et des bits de synchronisation n'ayant aucun intérêt pour la liaison vers un autre réseau local. L'inconvénient des réseaux de télécommunications à technique temporelle synchrone, pour l'application à la liaison entre deux réseaux locaux, est de limiter le débit des échanges de données à 2Mb/s.

Par ailleurs, on sait que les futurs réseaux de télécommunications à technique temporelle asynchrone permettront des transmissions des données à débit beaucoup plus élevé, jusqu'à 600Mb/s. La Revue des Télécommunications, volume 62, n°3/4/1988 décrit un protocole conçu pour transmettre des données dans un réseau de télécommunications à technique asynchrone, ces données pouvant être échangées par des stations internes au réseau ou bien par des stations externes au réseau. La demande de brevet français FR-A-2 645 380 décrit un dispositif de traitement de messages de signalisation, mettant en oeuvre ce protocole.

La couche 2-1 d'un protocole de transmission de données dans un réseau de télécommunications à technique temporelle asynchrone a pour fonctions :
- de détecter les erreurs de transmission, au moyen de bits de contrôle par redondance cyclique;
- de détecter les pertes de cellules, au moyen de bits de numérotation placés dans un champ de chaque cellule, prévu pour des bits de contrôle;
- de segmenter des données d'un message avant de les transmettre sous la forme de cellules contenant chacune 28 octets des données;
- de réassembler les données de chaque message après réception des cellules les contenant.

L'article IEEE Global Telecommunications Conference vol.3, Decembre 1988, Hollywood US, page 1791-1797, D. JAPEL et al, "LAN/ISDN Interconnect Via Frame Relay" décrit un pont reliant des réseaux locaux via un réseau de télécommunication numérique à intégration de services, en utilisant le protocole dit à relayage de trame (normalisé par le CCITT). Ce pont comporte :
- des premiers moyens pour assurer les fonctions de la couche 2.1 de ce protocole de transmission de données, à l'intérieur du réseau de télécommunications;
- et des seconds moyens pour assurer les fonctions de la couche 1 d'un protocole de transmission de données à l'intérieur d'un réseau local, ces seconds moyens étant couplés aux premiers.

L'article International Switching Symposium Vol 2, 1 juin 1990, Stockholm pages 9-14, JP QUINQUIS et al, "Data Services and Lans Interconnection using ATM Technique" décrit un pont entre un réseau local et un réseau de télécommunication à mode de transfert asynchrone (ATM), utilisant un protocole au niveau de la couche d'adaptation ATM.

Le but de la présente invention est de proposer un pont permettant de relier chaque réseau local, conforme à la norme IEEE 802.3, à un réseau de télécommunications à technique temporelle asynchrone, en mettant en oeuvre un protocole connu pour la transmission de données dans un réseau de télécommunications à technique temporelle asynchrone, notamment le protocole décrit dans le numéro de la Revue des Télécommunications mentioné ci-dessus, pour permettre une liaison à haut débit entre des réseaux locaux distants.

L'objet de l'invention est un pont pour relier un réseau local, conforme à la norme IEEE 802.3, à un réseau de télécommunications à technique temporelle asynchrone, comportant :
- des premiers moyens pour assurer les fonctions de la couche 2.1 d'un protocole de transmission de données à l'intérieur du réseau de télécommunications en technique temporelle asynchrone;
- des seconds moyens pour assurer les fonctions de la couche 1 d'un protocole de transmission de données à l'intérieur du réseau local, ces seconds moyens étant couplés aux premiers moyens;
- les premiers moyens comportent : caractérisé en ce que, pour le sens de transmission du réseau de télécommmunication vers le réseau local :
   -- une mémoire pour recevoir du réseau de télécommunications des messages constitués d'au moins une cellule, et les restituer en changeant leur débit;
   -- un circuit de traitement de protocole pour détecter d'éventuelles erreurs de séquencement des cellules et d'éventuelles pertes de cellule, et pour rejeter chaque message dans lequel au moins une cellule est erronée ou manquante;
   -- une mémoire de données pour stocker les données contenues par les cellules valides;
   -- une mémoire de commande de réception et un processeur pour : lire les données mémorisées dans la mémoire de données, reconstituer une trame conforme au protocole du réseau local, et vérifier que cette trame est bien destinée à une station qui appartient au réseau local;
   -- une mémoire pour mémoriser les trames reconstituées;
- et les second moyens comportent des moyens pour ajouter à chaque trame reconstituée un préambule conforme au protocole du réseau local, puis l'émettre sur ce réseau local en respectant le processus d'accès à ce réseau local;
et en ce que, pour le sens de transmission du réseau local vers le réseau de télécommunications :
- les seconds moyens comportent une interface pour recevoir, sans les arrêter, toutes les trames qui circulent sur le réseau local, reconnaître le début et la fin de chaque trame, et pour éliminer les trames erronées;
- et les premiers moyens comportent :
   -- une mémoire pour mémoriser des messages constitués d'au moins une trame émise par le réseau local, cette mémoire étant adressée directement par l'interface;
   -- un processeur et une mémoire de données pour vérifier l'adresse de destination de chaque trame et inscrire dans la mémoire de données les trames non erronées et destinées à une station appartenant à un autre réseau local raccordé au réseau de télécommunications ;
   -- un circuit de traitement de protocole et une mémoire de commmande d'émission pour : découper les données et le code à redondance cyclique de chaque trame en tranches ayant la longueur des données utiles d'une cellule, constituer des cellules conformes au protocole de transmission dans le réseau de télécommunications, puis transférer ces cellules à ce réseau de télécommunications.

Le pont ainsi caractérisé a des caractéristiques, vues des stations qui lui sont raccordées, similaires à celles d'un réseau local simple, c'est-à-dire : une large bande passante, typiquement 10Mb/s; une connectivité totale; un faible taux d'erreurs; pas de problèmes de routage, ni de congestion; un trafic global élevé. La liaison physique entre le pont et le réseau de télécommunications est très simple, puisqu'il suffit d'un simple support physique tel qu'une fibre optique, grâce au multiplexage temporel asynchrone.

L'invention sera mieux comprise et d'autres caractéristiques apparaîtront à l'aide de la description ci-dessous et des figures l'accompagnant :
- la figure 1 représente les communications entre les couches du modèle de référence ISO, représentant les protocoles dans : deux réseaux locaux, un pont selon l'invention, et un réseau de télécommunications à technique temporelle asynchrone;
- la figure 2 représente la structure de l'en-tête d'une cellule transmettant des données sous une forme compatible avec la technique temporelle asynchrone;
- la figure 3 représente la structure des bits utiles d'une cellule.
- la figure 4 représente le schéma synoptique d'un exemple de réalisation de pont selon l'invention.

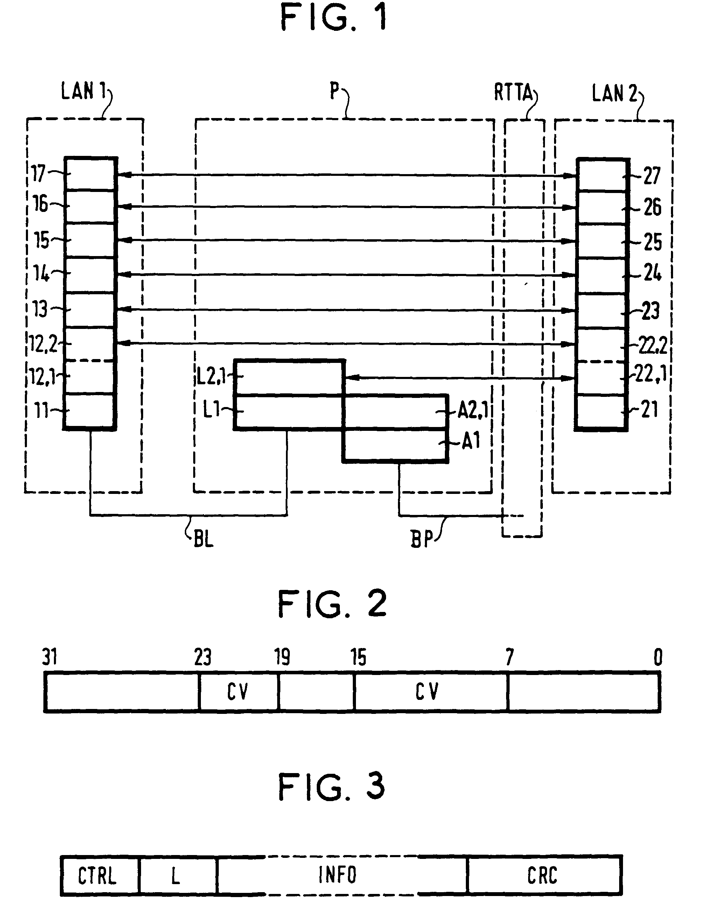

Sur la figure 1, les sept couches du protocole mis en oeuvre par chaque station d'un premier réseau local LAN1 sont référencées 11, 12.1, 12.2, 13, 14, 15, 16, 17. Les mécanismes mis en jeu par chacune de ces couches sont respectivement : physique, commande d'accès au médium, commande de liens logiques, réseau, transport, session, présentation, application. Les sept couches d'un protocole mis en oeuvre par chaque station d'un second réseau local LAN2 sont référencées respectivement 21 à 27. Dans cet exemple, un pont P conforme à l'invention, et un réseau de télécommunications à technique temporelle asynchrone, RTTA, relient le réseau local LAN1 au réseau LAN2. Pour cela, le pont P met en oeuvre la couche physique et la couche de commande d'accès au médium, notées respectivement L1 et L2.1, du protocole du réseau LAN1. La couche L2.1 de commande d'accès au médium communique avec la couche homologue, 22.1, du protocole du réseau LAN2. Les couches 12.2 à 17 du réseau LAN1 communiquent directement avec les couches 22.2 à 27 du protocole du réseau LAN2, le pont P et le réseau de télécommunications RTTA étant entièrement transparents de bout en bout pour ces couches.

Une liaison physique BL relie la couche 11 de LAN 1 à la couche L1 du pont P. Une liaison physique BP relie la couche A1 du pont P au réseau RTTA.

Le pont P met en oeuvre la couche n°2.1, notée A2.1, du protocole de transmission de données dans le réseau de télécommunications RTTA, ainsi que la couche n°1, physique, de ce protocole, pour accèder au réseau RTTA. Le pont P fait communiquer la couche physique L1 du protocole du réseau local LAN1 avec la couche A2.1 du protocole de transmission de données.

Dans un réseau local conforme à la norme IEEE 802.3, les données sont transmises sous la forme de trames ayant une longueur variable comprise entre 64 et 1518 octets. Chaque station possède une adresse qui lui est propre. La technique temporelle asynchrone est caractérisée par le multiplexage, sur un même support, de cellules ayant une longueur fixe, par exemple 36 octets, identifiées par un en-tête de 4 octets et possédant un contenu utile de 32 octets. A chaque communication correspond un en-tête. Le débit du support est indépendant de celui des communications qu'il achemine. Un pont selon l'invention réalise donc les fonctions suivantes :
- dans le sens réseau de télécommunications vers réseau local:
   -- reconstituer une trame du réseau local à partir de plusieurs cellules du réseau de télécommunications;
   -- analyser l'adresse de destination de cette trame, et la rejeter éventuellement, si son adresse ne correspond pas à une station présente dans le réseau local qui est raccordé au pont;
   -- écouter sur le bus du réseau local, attendre qu'il soit au repos, puis transmettre une trame reconstituée;
- dans le sens réseau local vers réseau de télécommunications:
   -- mémoriser chaque trame reçue du réseau local;
   -- rejeter cette trame si l'adresse destinataire correspond à une station présente dans le réseau local raccordé au pont considéré;
   -- reconnaître le début et la fin de chaque trame IEEE 802.3;
   -- découper les données et le code de contrôle par redondance cyclique, en tranches ayant la longueur des données utiles d'une cellule;
   -- constituer des cellules conformes au protocole de transmission d'informations dans le réseau de télécommunications à technique temporelle asynchrone, et les transférer vers ce réseau de télécommunications.

Chaque cellule de communication dans le réseau RTTA, comporte 36 octets, dont quatre octets d'en-tête et 32 octets utiles.

La figure 2 représente un en-tête, lequel comporte 12 bits de numéro de circuit virtuel, identifiant la communication à laquelle appartient la cellule. Ces douze bits sont les bits 8 à 15 et 20 à 23, référencés CV sur la figure. Les seize bits restant, 0 à 7, 16 à 19, 24 à 31, incluent un champ de détection et de correction d'erreurs sur l'en-tête et divers bits indépendants de l'application considérée ici.

La figure 3 représente le contenu utile d'une cellule. Il comporte :
- un octet CTRL de contrôle, comportant un bit d'indication de début de message, un bit d'indication de fin de message, un bit d'indication de présence d'un octet indicateur de longueur, et cinq bits de numérotation de cellule, modulo 32;
- un octet L indiquant la longueur utile des informations contenues dans le champ référencé INFO;
- un champ d'informations INFO;
- deux octets de contrôle cyclique par redondance, référencés CRC, portant sur les 32 octets de la cellule.

Si le bit d'indication de présence de l'octet de longueur a la valeur 1, l'octet qui suit l'octet de contrôle est alors un octet qui indique le nombre d'octets utiles dans le champ INFO. Ce dernier comporte au maximum 28 octets utiles. Si le bit indicateur a la valeur 0, l'octet qui suit l'octet de contrôle est un octet d'informations, il y a donc 29 octets utiles dans le champ INFO.

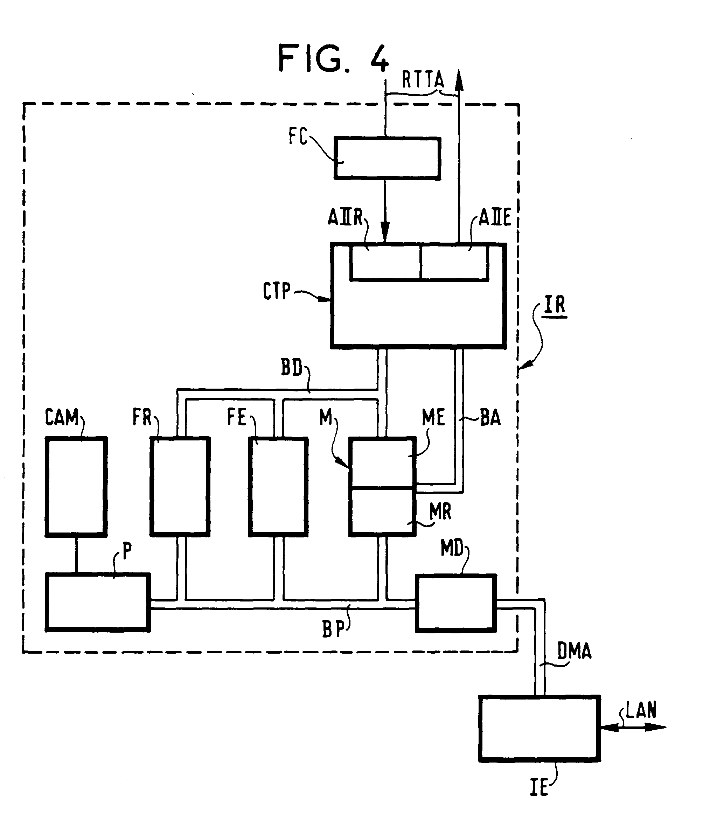

La figure 4 représente le schéma synoptique d'un exemple de réalisation du pont selon l'invention. Il comporte une première partie référencée IR, pour assurer les fonctions de la couche 2.1 du protocole de transmission de données à l'intérieur du réseau de télécommunications RTTA, et une seconde partie, référencée IE, pour assurer les fonctions de la couche 1, physique, de la transmission de données à l'intérieur du réseau local LAN1. La partie IR comporte : un circuit de traitement de protocole, référencé CTP; une mémoire de réception de cellules, FC; une mémoire de données M; une mémoire de commande d'émission, FE; une mémoire de commande de réception, FR; un processeur P, de traitement de la couche n°2.2, commande de lien logique, du protocole de transmission de données du réseau de télécommunications; une mémoire adressable par son contenu, CAM; et une mémoire, MD, adressable directement, sans passer par le processeur P.

La mémoire de données M constitue un tampon où sont stockées les données transitant par le pont. La mémoire M est une mémoire à double port permettant d'éviter des problèmes d'allocation de bus, de manière à optimiser la vitesse d'échange entre le circuit de traitement CPT et le processeur P. Les mémoires FE, FR, M, MD, et le processeur P sont reliées par un bus BP, dit bus de processeur. Les mémoires de commande d'émission, FE, et de commande de réception, FR, sont du type FIFO et permettent un dialogue entre le circuit de traitement CTP et le processeur P. Les mémoires FE, FR, et M sont reliées au circuit de traitement CTP par un bus de données BD. La mémoire M est reliée également au circuit de traitement CTP par un bus d'adresse BA.

La seconde partie, IE, du pont est une interface classique, pour réseau local conforme à la norme IEEE 803.2 qui est disponible sous la forme de circuit intégré standard. La partie IE est reliée à la partie IR du pont par une liaison notée DMA accèdant à la mémoire à accès directe MD.

Le circuit de traitement de protocole peut être constitué d'un réseau de cellules logiques programmables (PLA) tel que, par exemple, le composant XC3090 de la société XILINX. Le circuit de traitement CTP comporte une interface AIIE pour l'émission de données vers le réseau de télécommunications RTTA, et une interface AIIR de réception de données en provenance du réseau de télécommunications RTTA. La mémoire de données M est divisée en une partie appelée mémoire d'émission, ME, et une partie appelée mémoire de réception, MR, pour stocker respectivement les données à émettre vers le réseau de télécommunications et celles reçues de ce réseau.

Les trames fournies par le réseau local LAN sont mises en cellules, et inversement les cellules fournies par le réseau de télécommunications RTTA sont mises en trames selon la norme IEEE 802.3. Ces deux fonctions sont réalisées au moyen de la mémoire M, possédant un double port. C'est la gestion de ces deux ports, en lecture et en écriture, qui permet de réaliser ces fonctions. Ces deux fonctions sont totalement asynchrones. Les conflits d'accès sont résolus en réservant une partie de la mémoire à la lecture pendant qu'une autre partie est réservée à l'écriture.

L'interface IE dispose d'un accès direct, noté DMA, à la mémoire MD qui est en relation avec le processeur P par le bus BP. La mémoire MD contient : une liste de descripteurs de pages de réception réservées au message reçu du réseau local; une liste des descripteurs de pages de réception réservées au message à émettre vers le réseau de télécommunications; des pages de réception; des pages d'émission; des données d'initialisation fournies par le processeur pour l'interface IE; et une zone de travail pour le processeur P. L'interface IE reçoit, sans les arrêter, toutes les trames qui circulent sur le réseau local LAN. Seules les trames reçues correctement, ayant une longueur comprise entre 64 et 1518 octets, et ne comportant pas d'erreurs, sont rangées dans la mémoire MD, y compris le mot de contrôle cyclique par redondance.

Le processeur P est prévenu, par une interruption, de l'arrivée d'une trame que l'interface IE a rangée dans la mémoire MD. Le processeur P en extrait l'adresse de destination et consulte une table d'adresses qui lui a été préalablement fournie, pour décider s'il doit ou non rejeter cette trame. Si cette trame n'est pas destinée à une station reconnue par le pont comme étant une station du réseau local LAN, si l'adresse de destination n'est pas inconnue, et si elle n'est pas marquée dans la table des adresses comme devant être rejetée, le processeur P transfert cette trame dans la mémoire M, dans la partie émission ME. Puis il libère les emplacements mémoires de la mémoire MD qui contenaient cette trame.

La partie émission, ME, de la mémoire M comprend elle-même deux parties principales :
- une partie pour des données, dans laquelle sont stockés les messages à traiter et à transmettre vers le réseau de télécommunications, chaque zone ayant une capacité suffisante pour recevoir un message de longueur maximale, c'est-à-dire 1518 octets;
- une partie dite de contexte, utilisée pour mémoriser l'émission des cellules.

Il existe un contexte pour chacun des réseaux locaux accessibles par le pont. L'accès à ces réseaux locaux, au travers du réseau de télécommunications est indiqué par la présence d'un numéro de circuit virtuel CV dans le contenu d'une cellule. Le contexte d'émission correspondant à un circuit virtuel contient le numéro de la prochaine cellule à émettre sur ce circuit virtuel.

Lors de l'émission d'un message, le processeur P écrit le message complet dans l'une des deux zones de données de la mémoire ME puis il avertit le circuit de traitement de protocole CTP qu'un message est à traiter, en écrivant, dans la mémoire FE, une commande indiquant notamment le nombre d'octets du message à émettre et le numéro du circuit virtuel sur lequel devra être émis le message. Le numéro du circuit virtuel est obtenu à partir de l'adresse de destination de la trame, au moyen de la mémoire à adressage par le contenu, CAM.

Le circuit de traitement de protocole CTP scrute de manière régulière, à chaque fin d'émission de message, l'état de la mémoire FE. Lorsqu'elle est vide, il émet une cellule vide et scrute à nouveau la mémoire FE. Si elle n'est pas vide, il procède aux opérations suivantes :
- lecture d'une commande dans la mémoire FE;
- initialisation d'un compteur d'octets restant à transmettre;
- envoi de l'en-tête de la première cellule du message à émettre, incluant notamment le numéro de circuit virtuel fourni par la commande;
- envoi d'un octet de contrôle;
- mise à jour de la partie contexte de la mémoire ME, en y inscrivant le numéro de la prochaine cellule sur ce circuit virtuel;
- envoi de l'octet de longueur;
- 28 lectures d'un octet dans la zone de données de la mémoire ME, spécifiée dans la commande, puis envoi de ces octets;
- envoi de deux octets de contrôle cyclique par redondance, qui ont été calculés au fil de l'eau sur les 36 octets de la cellule;
- nouvelle d'émission de cellules jusqu'à épuisement du compteur d'octets.

Les cellules reçues par le circuit de traitement de protocole CTP, en provenance du réseau de télécommunications RTTA, transitent par une mémoire FC, de type FIFO, permettant un changement de débit. Cette mémoire est écrite au rythme de 15,6 mégaoctets par seconde, et lue au rythme de 2 mégaoctets par seconde. Les cellules reçues sont ensuite inscrites dans la partie réception MR de la mémoire M à double port. Cette partie réception comporte : un tampon circulaire formé de zones de 28 octets; des descripteurs associés aux différentes zones; une partie dite contexte utilisée pour le séquencement des cellules et pour l'identification de la première zone contenant le message reçu sur un circuit donné.

L'algorithme de traitement de la réception des cellules est le suivant. Le circuit de traitement de protocole CTP lit :
- l'en-tête d'une cellule reçue, et mémorise en interne le numéro du circuit virtuel;
- l'octet de contrôle;
- l'octet de longueur.

Dans la mémoire M, le circuit de traitement de protocole CTP lit :
- le contexte associé au circuit virtuel reçu;
- le descripteur associé à la zone de données qui est indiquée par un pointeur courant.

A partir de l'analyse des bits de l'octet de contrôle, le circuit CTP détecte d'éventuelles erreurs de séquencement des cellules, et d'éventuelles pertes de cellules sur un message long. En cas d'erreur, le message en cours de réception est abandonné et ne sera pas transmis au processeur P.

Le processeur P lit la mémoire FR lorsqu'elle celle-ci passe de l'état vide à l'état non vide, parce que le circuit CTP génère alors une interruption vers le processeur P. Puis, le processeur P vient explorer FR à chaque message lu, jusqu'à ce qu'il trouve cette mémoire vide. Le processus de lecture du message par le processeur P est le suivant :
- lecture de la commande dans la mémoire FR;
- lecture du descripteur de la zone contenant le début du message, dont l'adresse est indiquée par la commande, de manière à accéder au numéro de circuit virtuel du message à lire;
- dans le cas d'un message monocellule, lecture de la zone de données correspondant au descripteur;
- dans le cas d'un message long, balayage des descripteurs d'un même circuit virtuel depuis la première zone, jusqu'à trouver un bit indicateur de fin de message, puis lecture des données correspondant aux descripteurs retenus.

Une horloge est également disponible dans la mémoire M. C'est un compteur incrémenté par le circuit CTP à chaque période correspondant à une cellule. Au moment de la signalisation d'un message, l'heure courante est inscrite dans la commande. Lorsque le processeur viendra lire la mémoire FR, il connaîtra ainsi l'heure du message par comparaison entre l'heure donnée par la commande et l'heure courante. Ce processus permet de ne pas traiter les messages trop anciens.

La prise de connaissance, par le processeur P, de l'ensemble de ces informations, lui permet de reconstituer une trame conforme au protocole du réseau local. Le processeur P vérifie, en premier lieu, que la longueur de trame est correcte, c'est-à-dire comprise entre 64 et 1518 octets. Puis il extrait l'adresse de destination, consulte sa table d'adresses des stations du réseau local, pour s'assurer que la trame est bien destinée à une adresse d'une station située dans le réseau local auquel il est relié. Puis il vérifie la disponibilité des tampons d'émission dans la mémoire MD, qui sont accessibles par l'interface IE. Si toutes ces conditions sont réalisées, le processeur P transfère la trame dans ces tampons d'émission et envoie un ordre d'émission à l'interface IE.

L'interface IE, lorsqu'elle est prête, récupère cette trame, lui ajoute un préambule conforme au protocole du réseau local puis l'émet sur ce réseau local en respectant le processus d'accès. Une fois l'émission terminée avec succès, l'interface IE rend au processeur P les tampons qui étaient occupés par cette trame et le prévient par une interruption. Si une trame ne remplit pas l'une des conditions précédentes, concernant la longueur ou l'adresse, elle est rejetée par le processeur P, qui ne la transmet pas à l'interface IE.

La portée de l'invention n'est pas limitée à l'exemple de réalisation décrit ci-dessus, de nombreuses variantes de réalisation sont à la portée de l'homme de l'art.

## Revendications

1. Pont pour relier un réseau local (LAN), conforme à la norme IEEE 802.3, à un réseau de télécommunications à technique temporelle asynchrone (RTTA), comportant :
- des premiers moyens (IR) pour assurer les fonctions de la couche 2.1 d'un protocole de transmission de données à l'intérieur du réseau de télécommunications en technique temporelle asynchrone (RTTA);
- des seconds moyens (IE) pour assurer les fonctions de la couche 1 d'un protocole de transmission de données à l'intérieur du réseau local (LAN1), ces seconds moyens étant couplés aux premiers moyens (IR);
caractérisé en ce que, pour le sens de transmission du réseau de télécommmunication (RTTA) vers le réseau local (LAN) :
- les premiers moyens (IR) comportent :
-- une mémoire (FC) pour recevoir du réseau de télécommunications des messages constitués d'au moins une cellule, et les restituer en changeant leur débit;
-- un circuit de traitement de protocole (CTP) pour détecter d'éventuelles erreurs de séquencement des cellules et d'éventuelles pertes de cellule, et pour rejeter chaque message dans lequel au moins une cellule est erronée ou manquante;
-- une mémoire de données (M) pour stocker les données contenues par les cellules valides;
-- une mémoire (FR) de commande de réception, et un processeur (P) pour : lire les données mémorisées dans la mémoire de données (M), reconstituer une trame conforme au protocole du réseau local, et vérifier que cette trame est bien destinée à une station qui appartient au réseau local (LAN);
-- une mémoire (MD) pour mémoriser les trames reconstituées;
- et les second moyens (IE) comportent des moyens pour ajouter à chaque trame reconstituée un préambule conforme au protocole du réseau local (LAN ), puis l'émettre sur ce réseau local en respectant le processus d'accès à ce réseau local;
et en ce que, pour le sens de transmission du réseau local (LAN) vers le réseau de télécommunications (RTTA) :
- les seconds moyens (IE) comportent une interface pour recevoir, sans les arrêter, toutes les trames qui circulent sur le réseau local, et pour éliminer les trames erronées;
- et les premiers moyens (IR) comportent :
-- une mémoire (MD) pour mémoriser des messages constitués d'au moins une trame émise par le réseau local (LAN), cette mémoire étant adressée directement par l'interface;
-- un processeur (P) et une mémoire de données (M) pour vérifier l'adresse de destination de chaque trame, et inscrire dans la mémoire de données (M) les trames non erronées et destinées à une station appartenant à un autre réseau local raccordé au réseau de télécommunications (RTTA);
-- un circuit de traitement de protocole (CTP) et une mémoire de commmande d'émission (FE) pour : découper les données et le code à redondance cyclique de chaque trame en tranches ayant la longueur des données utiles d'une cellule, constituer des cellules conformes au protocole de transmission dans le réseau de télécommunications, puis transférer ces cellules à ce réseau de télécommunications (RTTA).

## Patentansprüche

1. Brückenschaltung zur Verbindung eines lokalen Netzes (LAN) gemäß der Norm IEEE 802.3 mit einem Fernmeldenetz (RTTA) gemäß der asynchronen Zeitmultiplextechnik,
- mit ersten Mitteln (IR), die die Aufgaben der Schicht 2.1 eines Datenübertragungsprotokolls innerhalb des Fernmeldenetzes (RTTA) gemäß der asynchronen Zeitmultiplextechnik wahrnehmen,
- mit zweiten Mitteln (IE), die die Aufgaben der Schicht 1 eines Datenübertragungsprotokolls innerhalb des lokalen Netzes (LAN) wahrnehmen und an die ersten Mittel (IR) gekoppelt sind,
dadurch gekennzeichnet, daß für die Übertragungsrichtung vom Fernmeldenetz (RTTA) zum lokalen Netz (LAN)
- die ersten Mittel (IR) aufweisen:
-- einen Speicher (FC) zum Empfang der aus mindestens einer Zelle gebildeten Nachrichten vom Fernmeldenetz und zur Weitergabe nach einem Wechsel ihres Durchsatzes,
-- eine Protokollbearbeitungsschaltung (CTP), um ggf. Fehler in der Abfolge der Zellen und Zellenverluste zu erfassen und jede Nachricht zu verwerfen, in der mindestens eine Zelle fehlerhaft ist oder fehlt,
-- einen Datenspeicher (M) zur Speicherung der in den fehlerfreien Zellen enthaltenen Daten,
-- einen Empfangssteuerspeicher (FR) und einen Prozessor (P), um die im Datenspeicher (M) gespeicherten Daten zu lesen, daraus einen Rahmen gemäß dem Protokoll des lokalen Netzes zu bilden und zu überprüfen, ob dieser Rahmen wirklich für eine Station bestimmt ist, die zu diesem lokalen Netz (LAN) gehört,
-- einen Speicher (MD) zur Speicherung der gebildeten Rahmen,
- während die zweiten Mittel (IE) Mittel enthalten, um jedem gebildeten Rahmen einen Vorspann gemäß dem Protokoll des lokalen Netzes (LAN) hinzuzufügen und dann diesen Rahmen an dieses lokale Netz unter Beachtung des Zugangsprozesses zu diesem lokalen Netz zu senden,
und dadurch, daß für die Übertragungsrichtung vom lokalen Netz (LAN) zum Fernmeldenetz (RTTA)
- die zweiten Mittel (IE) eine Schnittstelle besitzen, um alle Rahmen, ohne sie anzuhalten, zu empfangen, die im lokalen Netz zirkulieren, und um die fehlerhaften Rahmen zu eliminieren,
- und die ersten Mittel (IR) aufweisen:
-- einen Speicher (MD), um Nachrichten zu speichern, die von mindestens einem von dem lokalen Netz (LAN) ausgesendeten Rahmen gebildet werden, wobei dieser Speicher direkt von der Schnittstelle adressiert wird,
-- einen Prozessor (P) und einen Datenspeicher (M), um die Zieladresse jedes Rahmens zu überprüfen und um im Datenspeicher (M) die fehlerfreien und für eine Station eines anderen an das Fernmeldenetz (RTTA) angeschlossenen lokalen Netzes bestimmten Rahmen einzuschreiben,
-- eine Protokollbearbeitungsschaltung (CTP) und einen Sende-Steuerspeicher (FE), um die Daten und den zyklischen Redundanzkode jedes Rahmens in Abschnitte zu unterteilen, die je die Nutzdatenlänge einer Zelle haben, um Zellen gemäß dem Übertragungsprotokoll im Fernmeldenetz zu bilden und dann diese Zellen an dieses Fernmeldenetz (RTTA) zu übertragen.

## Claims

1. Bridge for connecting an IEEE 802.3 local area network (LAN) to an asynchronous time-division multiplex telecommunication network (RTTA), comprising:
- first means (IR) implementing the functions of layer 2.1 of a data transmission protocol of the asynchronous time-division multiplex telecommunication network (RTTA);
- second means (IE) implementing the functions of layer 1 of a data transmission protocol in the local area network (LAN), said second means being connected to the first means (IR);
characterised in that, for the transmission direction from the telecommunication network (RTTA) to the local area network (LAN):
- the first means (IR) include:
-- a memory (FC) for receiving from the telecommunication network messages comprising at least one cell and reconstituting them with a different bit rate;
-- a protocol processing circuit (CTP) for detecting cell sequencing errors and loss of cells and for rejecting each message in which at least one cell is invalid or missing;
-- a data memory (M) for storing the data contained in the valid cells;
-- a receive command memory (FR) and a processor (P) for reading the data stored in the data memory (M), reconstituting a frame conforming to the local area network protocol, and verifying that said frame is addressed to a station of the local area network (LAN);
-- a memory (MD) for storing the reconstituted frames; and
- the second means (IE) include means for adding to each reconstituted frame a preamble conforming to the local area network (LAN) protocol and then sending it to said local area network in accordance with the local area network access process;
and in that for the transmission direction from the local area network (LAN) to the telecommunication network (RTTA):
- the second means (IE) include an interface for receiving, without stopping them, all of the frame circulating in the local area network, and for eliminating the invalid frames; and
- the first means (IR) include:
-- a memory (MD) for storing messages made up of at least one frame transmitted by the local area network (LAN), said memory being addressed directly by the interface;
-- a processor (P) and a data memory (M) for verifying the destination address of each frame and writing into the data memory (M) frames that are not invalid and that are addressed to a station of another local area network connected to the telecommunication network (RTTA);
-- a protocol processing circuit (CTP) and a transmit command memory (FE) for: dividing the data and the cyclic redundancy check code of each frame into sections having the length of the payload of a cell, constituting cells conforming to the telecommunication network transmission protocol and then transferring said cells to said telecommunication network (RTTA).
